# EUROPÄISCHE PATENTSCHRIFT

(11) **EP 2 249 740 B1**
(45) Veröffentlichungstag und Bekanntmachung des Hinweises auf die Patenterteilung: **21.11.2012**
(21) Anmeldenummer: 09714335.8
(22) Anmeldetag: 02.02.2009
(51) Int. Cl.: A61C 8/00

(54) **ZAHNIMPLANTAT UND VERFAHREN ZU SEINER HERSTELLUNG**
TOOTH IMPLANT AND METHOD FOR PRODUCTION THEREOF
IMPLANT DENTAIRE ET SON PROCÉDÉ DE FABRICATION

(30) Priorität: 29.02.2008 DE 102008011963
(43) Veröffentlichungstag der Anmeldung: 17.11.2010
(60) Teilanmeldung: 12006110.6
(73) Patentinhaber: Rupprecht, Bernd, 37327 Leinefelde-Worbis OT Beuren (DE); Cyron, Axel, 38229 Salzgitter (DE)
(72) Erfinder: Rupprecht, Bernd, 37327 Leinefelde-Worbis OT Beuren (DE); Cyron, Axel, 38229 Salzgitter (DE)
(74) Vertreter: Schneider, Peter Christian
(86) Internationale Anmeldenummer: PCT/EP2009/000663
(87) Internationale Veröffentlichungsnummer: WO 2009/106205

(56) Entgegenhaltungen:
- WO-A-03/045268
- WO-A-2007/025784
- DE-A1- 4 407 993
- US-A- 4 872 840
- US-A1- 2006 246 397

## Beschreibung

### Gebiet der Erfindung

Die Erfindung bezieht sich auf ein Zahnimplantat, umfassend einen bereichsweise in einen Kieferknochen inserierbaren Sockel mit einem apikal gelegenen Körper und einem koronal gelegenen Hals, deren äußere Oberflächen jeweils eine Oberflächen-Mikrostruktur vorgegebener Rauheit aufweisen, wobei der Wert der mittleren Rauheit der Körperoberfläche größer ist als der Wert der mittleren Rauheit der Halsoberfläche.

Die Erfindung betrifft weiter ein Verfahren zur Herstellung eines Zahnimplantatsockels.

### Stand der Technik

Derartige Zahnimplantate sind bekannt aus der DE 60 2004 007 427 T2 (deutsche Übersetzung der EP 1 477 141 B1).

Enossale Zahnimplantate sind seit langem bekannt, wobei sich im Laufe der Entwicklung die unterschiedlichsten Varianten und unterschiedliche, zu ihrer Beschreibung verwendete Terminologien herausgebildet haben. Im Rahmen der hiesigen Anmeldung wird sowohl bei der Beschreibung des Standes der Technik als auch bei der Erläuterung der Erfindung von folgender Terminologie ausgegangen: das Zahnimplantat umfasst stets einen Sockel, der wenigstens bereichsweise in den Kieferknochen inseriert wird. Bei den von der vorliegenden Erfindung betroffenen Zahnimplantaten ist der Sockel in zwei axiale Bereiche unterteilbar. Ein erster Bereich, Körper genannt, ist in bestimmungsgemäßer Endlage im Wesentlichen vollständig in den Kieferknochen inseriert. Ein sich koronal anschließender zweiter Bereich, Hals genannt, ragt in bestimmungsgemäßer Endlage im Wesentlichen vollständig über den Kieferknochen hinaus und ist von Zahnfleischgewebe umgeben. Koronal des Sockels setzt typischerweise ein Aufbau an, der im Wesentlichen vollständig über das Zahnfleischgewebe hinausragt. Der Aufbau dient als Kern einer an ihm zu befestigenden Krone. Der Aufbau kann einstückig mit dem Sockel oder als separates Bauteil ausgebildet sein, welches mit dem Sockel beispielsweise verschraubt oder verklebt wird.

Zur mechanischen Vorfixierung des Sockels im Kieferknochen ist die Außenfläche des Körpers oft mit einem ggf. selbstschneidenden Gewinde versehen, mit dem der Sockel in eine vorgebohrte Ausnehmung im Kieferknochen eingeschraubt wird. Eine dauerhafte Fixierung des Implantats hängt jedoch wesentlich von der über diese Vorfixierung hinausgehenden Wechselwirkung zwischen dem biologischen Material, d.h. Knochen- und/oder Zahnfleischgewebe, mit der Sockeloberfläche ab. Wichtig ist zunächst die Biokompatibilität des Sockelmaterials. Hier haben sich Sockel aus Titan oder Titanlegierungen bewährt. Für die optimale Wechselwirkung zwischen Gewebe und Sockelmaterial ist jedoch auch die Oberflächenstruktur des Sockels von erheblicher Bedeutung. Diesbezüglich wurden und werden vielfältige Studien mit zum Teil einander widersprechenden Ergebnissen durchgeführt. Einigkeit besteht darüber, dass eine Mikrostrukturierung der Oberfläche positive Effekte zeitigen kann.

Die DE 695 33 448 T2 (deutsche Übersetzung der EP 0 794 745 B1) schlägt die Ausbildung einer gleichmäßigen Oberflächenrauheit für Körper und Hals des Implantatsockels vor. Die gattungsbildende DE 60 2004 007 427 T2 berücksichtigt hingegen die unterschiedlichen Gewebeeigenschaften von Knochenmaterial und Zahnfleischgewebe und schlägt folglich eine unterschiedliche Oberflächenrauheit für den Körperbereich und den Halsbereich des Sockels vor. Insbesondere wird vorgeschlagen, die Oberflächenrauheit des Körpers durch ein Ätzverfahren auf ein bis drei Mikrometer einzustellen, wohingegen die Oberfläche des Halses "relativ glatt" auszubilden ist. Dies führt zu einer scharfen Trennkante der Oberflächenrauheiten von Körper und Hals, wobei die Rauheit der Körperoberfläche für die Wechselwirkung mit dem Knochengewebe und die Oberflächenrauheit des Halses für die Wechselwirkung mit dem Zahnfleischgewebe optimiert sein soll. Nachteilig bei diesen bekannten Implantaten ist, dass im inserierten Zustand die Rauheitsgrenze in der Regel nicht oder wenigstens nicht vollumfänglich mit der Gewebegrenze zwischen Knochen und Zahnfleisch übereinstimmt. Dies liegt weniger an einem unpräzisen Einsetzen des Implantats als vielmehr an der natürlichen Form des Knochenkamms im Kiefer, die typischerweise nicht die Einbringung einer Ausnehmung mit perfekt horizontalem Rand, der der Rauheitsgrenze entsprechen würde, erlaubt. Folglich ergeben sich Zwischenbereiche, in denen ein Gewebematerial mit einer Oberfläche wechselwirken muss, die eine für diese Wechselwirkung völlig ungeeignete Oberflächenrauheit aufweist. US 2006/246397 A1 offenbart ein Zahnimplantat, dessen Halsoberfläche "mikro-aufgeraut" ist, und, dessen Körperdoberfläche "aufgeraut" ist.

### Aufgabenstellung

Es ist die Aufgabe der vorliegenden Erfindung, gattungsgemäße Zahnimplantate derart weiterzubilden, dass insbesondere im Übergangsbereich zwischen Knochen- und Zahnfleischgewebe eine verbesserte Anwachsung erfolgt.

### Darlegung der Erfindung

Diese Aufgabe wird in Verbindung mit den Merkmalen des Oberbegriffs von Anspruch 1 dadurch gelöst, dass der Wert der mittleren Rauheit der Körperoberfläche Ra=0,75 bis 0,95 Mikrometer und der Wert der mittleren Rauheit der Halsoberfläche Ra=0,55 bis 0,71 Mikrometer beträgt.

Die vorgeschlagenen, erfindungsgemäßen Rauheitswerte sind das Ergebnis einer aufwendigen, experimentell überprüften Abwägung zwischen der Optimierung jeder Oberfläche für die Wechselwirkung mit der ihr jeweils zugeordneten Gewebeart einerseits und der Kompatibilität der Oberfläche mit der jeweils anderen Gewebeart andererseits. Überraschenderweise führt diese suboptimale Ausgestaltung jedes Oberflächenbereichs im Hinblick auf das jeweils zugeordnete Gewebe insgesamt zu einer verbesserten Haltbarkeit des Implantats, da die resultierende, deutlich verbesserte Wechselwirkung im kritischen Übergangsbereich zwischen Knochen und Zahnfleisch überkompensierend wirkt. Es hat den Anschein als hätten bei Implantaten nach dem Stand der Technik die Unverträglichkeiten der für jeweils eine Gewebeart optimierten Oberflächen mit der jeweils anderen Gewebeart bislang völlig unterschätzte negative Einflüsse auf die Gesamthaltbarkeit des Implantats. Entsprechende Berichte sind jedenfalls nicht bekannt. Die Erfindung ist das Ergebnis eines bisher nirgends verfolgten, ganzheitlicheren Ansatzes.

Als weiterer Vorteil der Erfindung ergibt sich eine gesteigerte Variabilität beim Einsetzen des erfindungsgemäßen Implantats. Durch die erläuterte verbesserte Verträglichkeit der Oberflächenbeschaffenheiten der verschiedenen Bereiche mit der jeweils anderen Gewebeart ist es möglich, beim Einsetzvorgang die Einsatztiefe bedarfsweise zu variieren ohne die Haltbarkeit des Implantats zu gefährden. Bei Implantaten nach dem Stand der Technik müsste hingegen im Fall, dass unter der Operation eine andere als die beabsichtigte Einsatztiefe erforderlich wird, ein anderes, entsprechend dimensioniertes Implantat verwendet werden. Eine Variation der Einsetztiefe eines gegebenen Implantats wäre nicht möglich.

Besonders vorteilhafte Ausführungsformen der Erfindung sind Gegenstand der abhängigen Ansprüche.

Grundsätzlich können die erfindungsgemäßen Rauheitswerte auf beliebige Weise erzielt werden. Es hat sich jedoch als effizient erwiesen, die Oberflächen-Mikrostruktur der Körperoberfläche durch einen Strahlvorgang mit einem harten Strahlmittel, beispielsweise Sand oder Korund, und einem nachfolgenden Ätzvorgang und die Oberflächen-Mikrostruktur der Halsoberfläche durch einen Ätzvorgang zu erzeugen. Der Ätzvorgang erfolgt vorzugsweise mit einem basischen Ätzmittel, insbesondere ein Ätzmittel, dass eine hohe Konzentration von Kaliumhydroxid enthält. Ein derartiges Ätzverfahren ist aus der DE 603 01 796 T2 (deutsche Übersetzung der EP 1 515 759 B1) bekannt, die sich im Übrigen jedoch mit dem mehrschichtigen Aufbau eines Zahnimplantatsockels beschäftigt.

Aufgrund der erwiesenen Biokompatibilität besteht der Sockel vorzugsweise im Wesentlichen aus Metall oder einer Metalllegierung, insbesondere aus Titan oder eine Titanlegierung.

Um eine rein mechanische Vorfixierung im Kieferknochen zu erreichen, trägt der Körper vorzugsweise eine makroskopische Außengewindestruktur. Diese lässt sich, wie aus dem Stand der Technik bekannt, in eine vorgefertigte Ausnehmung im Kieferknochen eindrehen und stellt eine formschlüssige mechanische Fixierung des Sockels dar, die ein Anwachsen des Gewebes an der erfindungsgemäß gestalteten Sockeloberfläche erlaubt. Günstig sind hierbei selbstschneidende Gewindestrukturen.

Bevorzugt weist der Hals eine umlaufende Ringnut auf. Die Ringnut trägt günstigerweise einen kreisabschnittförmigen Querschnitt mit einem Radius von 0,2 bis 0,3 Millimetern, insbesondere von etwa 2,5 Millimetern. Eine solche Ringnut verbessert die Anwachsung erwünschten Gewebes an der Sockeloberfläche. Ein häufiges Problem bei der Anwachsung sind nämlich schnell wachsende Epithelzellen, die von koronal nach apikal an der Sockeloberfläche entlangwachsen und damit die Anwachsung von Zahnfleisch am Hals des Sockels bzw. bei sehr weitgehendem Epithelzellwuchs auch die Anwachsung der Knochenzellen an der Körperoberfläche behindern oder verhindern. Es hat sich jedoch herausgestellt, dass scharfe Kanten, wie sie beispielsweise die Nutränder einer Ringnut mit bevorzugt etwa halbkreisförmigen Querschnitt aufweisen, das unerwünschte Epithelzellwachstum behindern. Somit gewinnen die langsamer wachsenden Zahnfleisch- bzw. Bindegewebszellen ausreichend Zeit, um im Halsbereich anzuwachsen, bevor die Epithelzellen diese Bereich überwachsen. Damit besteht auch keine Gefahr mehr, dass weiter apikal liegende Bereiche von den Epithelzellen überwachsen werden, sodass die noch langsamer wachsenden Knochenzellen ausreichend Zeit haben, um im Körperbereich des Sockels anzuwachsen. Ein zusätzlicher Effekt der vorteilhaften Ringnut ist die Vergrößerung der Wechselwirkungsoberfläche im Vergleich zu einem im Wesentlichen zylinderförmigen Sockelhals. Hierdurch wird die Gesamtkraft, mit der das Implantat im Gewebe gehalten wird, vergrößert. Schließlich stellt das in die Ringnut eingewachsene Bindegewebe eine Dichtung nach Art eines O-Rings dar, der einen guten Schutz vor dem Eindringen von unerwünschten Schmutzpartikeln bietet. Man beachte, dass die Ausbildung der Ringnut nicht zwingend an die erfindungsgemäße Oberflächenrauheitsverteilung gekoppelt ist. Vielmehr ist es möglich, auch Implantate mit anderen Rauheitsverteilungen ihrer Sockeloberfläche durch die erläuterte Ringnut wesentlich zu verbessern.

Eine wichtige Problemzone von Zahnimplantaten ist der Übergang vom Sockel zum Aufbau. Typischerweise ist der Sockel im Wesentlichen hohl gestaltet und weist einen Einführbereich für einen korrespondierenden Verbindungsbereich des Aufbaus auf. Die Verbindung zwischen Aufbau und Sockel erfolgt häufig durch eine den Aufbau durchsetzende und in ein Innengewinde des Sockels eingeschraubte Schraube. Hierdurch ergeben sich zwangsläufig bleibende Hohlräume im Sockelinneren. Es ist von besonderer Wichtigkeit, dass diese Hohlräume gas- und bakteriendicht abgeschlossen werden. Eine kritische Zone ist dabei die Kontaktzone zwischen der Aufnahmeöffnung des Sockels und dem Einführbereich des Aufbaus. Zur Verbesserung der Gas- und Bakteriendichtigkeit ist daher bei einer Weiterbildung der Erfindung vorgesehen, dass ein Aufbau umfasst ist, der mit einem konischen Verbindungsbereich in einen Aufnahmebereich des innen hohl ausgebildeten Sockels einsetzbar ist, wobei der konische Verbindungsbereich eine mit einem Aufbau-Kegelwinkel konisch nach apikal zulaufende Außenfläche aufweist, der Aufnahmebereich im koronalen Bereich des Halses eine mit einem Sockel-Öffnungswinkel konisch nach apikal zulaufende Innenfläche aufweist und der Aufbau-Kegelwinkel 20 bis 60 Bogenminuten größer ist als der Sockel-Öffnungswinkel. Der Absolutbetrag des Sockel-Öffnungswinkels bzw. des Aufbau-Kegelwinkels liegt bevorzugt bei 15 Grad bis 25 Grad, vorzugsweise bei ca. 20 Grad. Der Aufbau-Kegelwinkel ist daher geringfügig stumpfer als der Sockel-Öffnungswinkel. Dies führt zu einer scharfen, ringförmigen Kontaktzone zwischen dem konischen Verbindungsbereich des Aufbaus und der Aufnahmeöffnung des Sockels. Bei einer Verschraubung beider Elemente wirkt aufgrund der geringen Fläche der Kontaktzonen ein hoher Druck, der eine sehr gute Gas- und Bakteriendichtigkeit erzeugt. Man beachte, dass diese Art der dichten Verbindung eine Umkehrung des so genannten Glasschliffdeckel-Prinzips darstellt, bei dem der Kegelwinkel eines einzuführenden Stopfens geringfügig spitzer ist als der Öffnungswinkel der korrespondierenden Aufnahme, wobei die Verschlusswirkung bei dieser Konstruktion auf der besonders großen Fläche der Wechselwirkungszone beruht. Man beachte, dass die erläuterte, vorteilhafte Dichtung zwischen Sockel und Aufbau nicht zwingend mit der erfindungsgemäßen Verteilung der Oberflächenrauheiten des Sockels gekoppelt sein muss. Vielmehr ist sie durchaus geeignet, auch mehrteilige Zahnimplantate mit anderer Sockeloberflächen-Gestaltung im Hinblick auf die Gas- und Bakteriendichtigkeit zu verbessern.

Als wesentliches Material für den Aufbau haben sich Titan, Titanlegierungen und Zirkon-Oxyd bewährt. Ein wesentliches Problem bei zweiteiligen Zahnimplantaten ist die Erzielung einer Verdrehsicherung des Aufbaus gegenüber dem Sockel einerseits und eine präzise Ausrichtbarkeit des Aufbaus relativ zum Sockel andererseits.

Bei einer vorteilhaften Weiterbildung der Erfindung ist daher vorgesehen, dass der Aufbau apikal des konischen Verbindungsbereichs einen nicht-rotationssymmetrischen Verdrehschutzvorsprung aufweist, der formschlüssig in eine korrespondierende Verdrehschutzausnehmung des Sockels einführbar ist. Der Verdrehschutzvorsprung und die korrespondierende Verdrehschutzausnehmung weisen bevorzugt axial ausgerichtete Wandungen auf. Durch die fehlende Rotationssymmetrie ist bei formschlüssigen Eingreifen des Vorsprungs in die Ausnehmung der Verdrehschutz gegeben. Um eine gute Ausrichtbarkeit zu erreichen, kann zusätzlich vorgesehen sein, dass der Verdrehschutzvorsprung und die korrespondierende Verdrehschutzausnehmung mehrfach Achsen- oder mehrfach rotations-inversions-symmetrisch ausgebildet sind. Der erstgenannte Fall tritt beispielsweise bei gleichmäßigen, geradzahligen Vieleck- oder Sternformen auf, während der zweite Fall beispielsweise bei gleichmäßigen, ungeradzahligen Vieleck- oder Sternformen als Profil des Verdrehvorsprungs und der Verdrehschutzausnehmung auf. Derartige Verdrehschutzmaßnahmen sind im Grunde aus der DE 600 022 35 T2 bekannt. Um die Ausrichtbarkeit zu verbessern, sollte eine Symmetrie hoher Ordnung verwirklicht werden. Bevorzugt werden 12-facheVieleck-, Stern oder Kleeblattformen.

In manchen Fällen spielt jedoch die Ausrichtung von Aufbau und Sockel zueinander keine oder nur eine untergeordnete Rolle. In diesen Fällen kann vorgesehen sein, dass ein sich koronal an den Hals anschließender Aufbau umfasst ist, der mit dem Sockel einstückig verbunden ist. Die stoffschlüssige Verbindung kann beispielsweise durch einen zementartigen Klebstoff oder Verschweißen erfolgen. Bei diesen Varianten, insbesondere der einstückigen Ausbildung, ist eine optimale Dichtigkeit gegen Gas und Bakterien gewährleistet.

Auch stoffschlüssige Verbindungen von Aufbau und Sockel sind realisierbar, wobei der Stoffschluss fallweise vor oder nach dem Einsetzen des Sockels vorgenommen werden kann.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine Schnittdarstellung einer ersten Ausführungsform eines erfindungsgemäßen Zahnimplantatsockels
- Figur 2:: eine Seitenansicht des Sockels von Figur 1
- Figur 3:: eine Draufsicht auf den Sockel von Figur 1
- Figur 4:: eine Unteransicht des Sockels von Figur 2
- Figur 5:: eine Schnittdarstellung einer zweiten Ausführungsform eines erfindungsgemäßen Zahnimplantatsockels
- Figur 6:: eine Seitenansicht des Sockels von Figur 5
- Figur 7:: eine Schnittdarstellung des Sockels von Figur 1 mit einer ersten Ausführungsform eines eingesetzten Aufbaus
- Figur 8:: eine Schnittdarstellung eines Sockels mit stoffschlüssig verbundener, zweiter Ausführungsform eines Aufbaus.
- Figur 9:: eine Seitenansicht einer dritten Ausführungsform eines Aufbaus
- Figur 10:: eine teilweise geschnittene und ausgebrochene Seitenansicht des Sockels von Figur 9
- Figur 11:: eine Seitenansicht einer vierten Ausführungsform eines Aufbaus
- Figur 12:: eine teilweise geschnittene und ausgebrochene Darstellung des Aufbaus von Figur 11
- Figur 13:: eine einteilige Ausführungsform eines erfindungsgemäßen Implantates
- Figur 14:: eine schematische Darstellung einer natürlichen Zahnreihe
- Figur 15:: eine schematische Darstellung einer Zahnreihe mit einem Implantat gemäß dem Stand der Technik
- Figur 16:: eine schematische Darstellung einer Zahnreihe mit einem erfindungsgemäßen Implantat.

### Ausführliche Darstellung bevorzugter Ausführungsformen

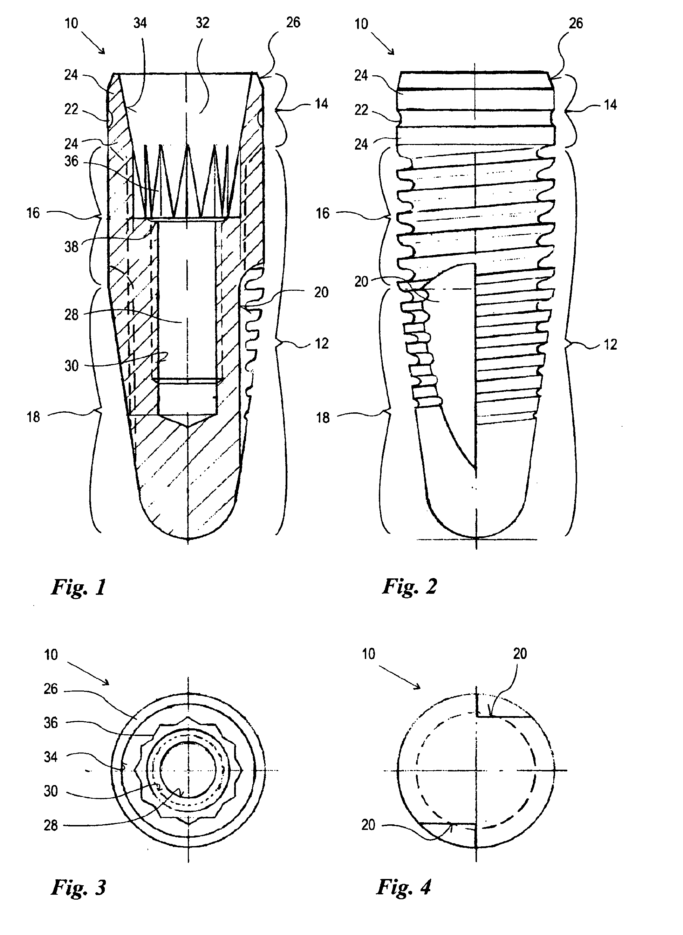

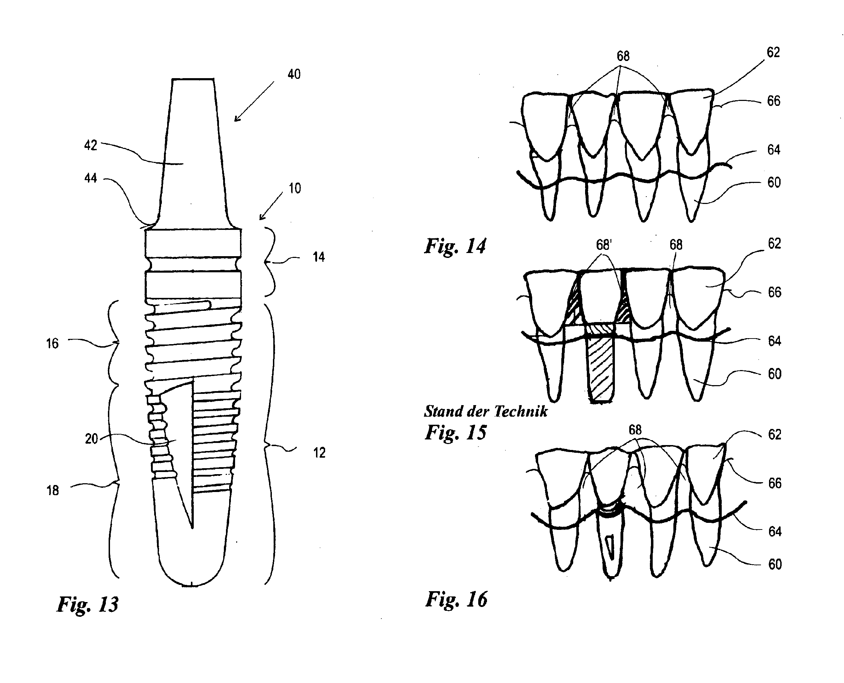

Die Figuren 1 bis 4 zeigen verschiedene Darstellungen einer bevorzugten Ausführungsform eines erfindungsgemäßen Implantatsockels 10. Der Sockel 10 umfasst einen apikal gelegenen Körper 12 und einen sich koronal daran anschließenden Hals 14. Im implantierten Zustand (vgl. Figur 16) ist der Körper 12 im Wesentlichen von Knochengewebe umgeben, während der Hals 14 im Wesentlichen von Zahnfleischgewebe umwachsen ist. Bei der bevorzugten Ausführungsform ist der Sockelkörper 12 in zwei Abschnitte unterteilt, nämlich einen koronal gelegenen, im Wesentlichen zylindrischen Abschnitt 16 und einen apikal hierzu gelegenen, konisch zu- und in einem Radius auslaufenden Abschnitt 18. Beide Abschnitte 16, 18, tragen ein mehrgängiges, makroskopisches Außengewinde, dessen Tiefe sich in Richtung auf die Kegelspitze im konischen Abschnitt 18 verringert und gegen Null ausläuft. Das Gewinde dient der mechanischen Vorfixierung des Sockels in einer vor dem Einsetzen in den Kieferknochen gebohrten Ausnehmung. Das Gewinde ist vorzugsweise selbstschneidend ausgebildet, sodass ein Eindrehen in eine Knochenausnehmung mit geraden Bohrlochwänden möglich ist.

Die gezeigte Ausführungsform trägt eine sich axial erstreckende und einen rechten Winkel mit einer Radialrichtung einnehmende Fräskante 20, deren Frästiefe in etwa der Gewindetiefe entspricht. Die Fräskante 20 erstreckt sich über den gesamten, gewindetragenden Bereich des konischen Abschnitts 18 und ragt koronal über diesen geringfügig in den zylindrischen Abschnitt 16 hinaus. Eine derartige Fräskante 20, die nicht die makroskopische Gewindestruktur trägt, hat sich als vorteilhafte Wechselwirkungsfläche mit dem Knochengewebe ergeben und verbessert das Anwachsverhalten, sodass eine festere Einwachsung des Sockels 10 in den Kieferknochen erreicht wird. Zur Steigerung dieses Effektes weist die dargestellte Ausführungsform zwei derartige Fräskanten 20 auf, die einander punktsymmetrisch zum Mittelpunkt der Querschnittsebene des Sockels gegenüberliegen. Bei anderen, nicht dargestellten Ausführungsformen können mehr oder weniger als zwei Fräskanten 20 vorgesehen sein. Auch die rechtwinklige Ausbildung der Fräskanten 20 ist nicht zwingend erforderlich, wenngleich fertigungstechnisch vorteilhaft. Die winklige Ausgestaltung der Fräskante 20 hat im Vergleich zu einer grundsätzlich ebenfalls möglichen Fräskante entlang einer durchgehenden Kreissehne (bezogen auf den Querschnitt) den Vorteil einer effizienteren Sicherung gegen Rotations- und radiale Translationskräfte, die auf den eingewachsenen Sockel 10 wirken.

Der Hals 14 der dargestellten Ausführungsform des Implantatsockels 10 ist in seinem apikalen Bereich im Wesentlichen zylindrisch ausgebildet und weist eine die Zylinderfläche unterbrechende Ringnut 22 auf. Bei der dargestellten Ausführungsform weisen die der Ringnut 22 benachbarten, zylindrischen Bereiche 24 des Halses 14 in etwa die gleiche Breite auf, die ihrerseits der Breite der Ringnut 22 in etwa entspricht. Wie erwähnt, ist der Hals 14 im eingewachsenen Zustand im Wesentlichen von Zahnfleischgewebe umgeben. Das Zahnfleischgewebe wächst insbesondere auch die Ringnut 22 ein und bildet eine wirksame Dichtung nach Art eines O-Rings. Außerdem wirken die Kanten der Ringnut 22 an den Übergängen zu den zylindrischen Bereichen 24 wachstumshemmend auf Epithelzellen, die typischerweise sehr schnell von koronal nach apikal an der Außenwand des Sockels 10 entlang wachsen können und die Anwachsung von langsamer wachsenden Zahnfleischgewebezellen im Bereich des Halses 14 und ggf. Knochengewebezellen im Bereich des Körpers 12 behindern können.

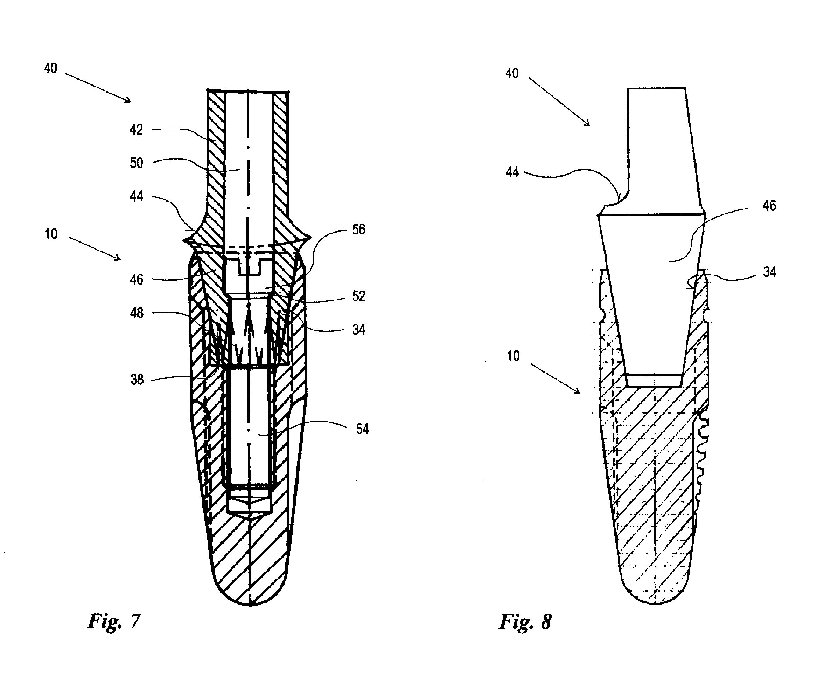

Im koronalen Endbereich des Halses 14 trägt dieser eine Anfasung 26, mit der der koronale Abschluss des Halses 14 verjüngt wird. Hierdurch gelingt eine bessere Konturanpassung an einen auf dem Sockel aufsetzenden Aufbau, der weiter unten in Verbindung mit Figur 7 näher beschrieben werden soll.

In seinem Inneren ist der Sockel 10 im Wesentlichen hohl ausgebildet, wie insbesondere aus der Schnittdarstellung von Figur 1 ersichtlich ist. Der apikale Bereich der inneren Ausnehmung des Sockels 10 ist als Sackbohrung 28 mit einem Innengewinde 30 ausgebildet. Dieses Innengewinde 30 dient der weiter unten in Zusammenhang mit Figur 7 zu beschreibenden Schraubfixierung des Aufbaus. Koronal an die Sackbohrung 28 schließt sich ein Aufnahmebereich 32 für den Aufbau an, wobei der Aufnahmebereich 32 in zwei Abschnitte unterteilt ist. Ein koronaler Abschnitt 34, der als Einführbereich für den Aufbau dient, ist im Wesentlichen nach apikal hohlkegelförmig zulaufend ausgebildet, während der apikal gelegene Abschnitt 36, der als Verdrehschutz für den Aufbau dient, eine gerade Wandung aufweist, die die Hohlkegelfläche fortsetzende Vorsprünge trägt. In der Draufsicht der Figur 3 ist die resultierende nicht-rotationssymmetrische Struktur gut erkennbar, die bei der gezeigten Ausführungsform die Form eines 12-strahligen Sterns aufweist. Diese Struktur dient, wie weiter unten in Zusammenhang mit Figur 7 näher erläutert wird, der Verdrehsicherung des Aufbaus. Der Aufnahmebereich 32 ist auch an seiner engsten Stelle, d.h. seiner apikalen Grenze, breiter ausgebildet als die benachbarte Sackbohrung 28, sodass sich eine Schulter 38 bildet. Die Schulter 38 dient als Anschlagfläche für den weiter unten zu beschreibenden Aufbau.

Der in den Figuren 1 und 2 erkennbaren makroskopischen Oberflächenstruktur des Sockels 10 ist eine in den Figuren nicht erkennbare und grundsätzlich auch unabhängig von der makroskopischen Struktur vorteilhaft einsetzbare Mikrostruktur überlagert. Diese Mikrostruktur lässt sich insbesondere gemäß ihren Rauheitswerten charakterisieren. Zur Charakterisierung kann insbesondere der so genannte RA-Wert gemäß DIN EN ISO 4287 dienen, der dem arithmetischen Mittenrauwert entspricht. Bei einer besonders bevorzugten Ausführungsform beträgt der RA-Wert, gemessen im Rahmen einer Linienmessung über 2000 Mikrometer im Bereich des Halses 14 RA=0,68 ± 0,02 Mikrometer und im Bereich des Körpers RA 0,90 ± 0,03 Mikrometer. Gemessen über eine Strecke von 800 Mikrometern ergaben sich bei demselben Implantatsockel im Bereich des Halses RA=0,61 ± 0,03 Mikrometer und im Bereich des Körpers RA=0,79 ± 0,03 Mikrometer. Eine Flächenmessung mittels eines AFM (atomic force microscope) über 100 x 100 Mikrometer ergab am selben Messobjekt einen SA-Wert im Bereich des Halses von SA=0,451 ± 0,023 Mikrometer und im Bereich des Körpers SA=0,598 ± 0,031 Mikrometer.

Zur Herstellung derartiger Rauheitswerte wird, ausgehend von einer geschliffenen oder polierten, die gewünschte Makrostruktur tragenden Oberfläche, der Körper 12 des Sockels 10 mit einem harten Strahlmittel, wie beispielsweise Sand, Glasperlen oder Korund geeigneter Größe bis zur Erzielung eines RA-Wertes, der größer als der letztendlich gewünschte RA-Wert ist, gestrahlt. Dieser temporäre Rauheitswert kann insbesondere eine Größenordnung von RA=0,85 bis 1,20 Mikrometer annehmen. Im Fall des bereits weiter oben beschriebenen Beispiels lag der temporäre RA-Wert bei einer Linienmessung über 2000 Mikrometer bei RA=1,13 ± 0,04 Mikrometer und bei einer Linienmessung über 800 Mikrometer bei RA=0,89 ± 0,02 Mikrometer. Der entsprechende SA-Wert einer Flächenmessung über 100 x 100 Mikrometer betrug SA=0,705 ± 0,033 Mikrometer. In einem nachfolgenden Verfahrensschritt wird der gesamte Sockel 10 einer basischen Ätz-Behandlung mit einem basischen Ätzmittel, das eine hohe Konzentration von Kaliumhydroxid enthält und grundsätzlich aus der DE 603 01 796 T2 bekannt ist, unterworfen. Das Ätzen wird solange durchgeführt, bis Hals 14 und Körper 12 des Sockels 10 die gewünschten Rauheitswerte ihrer Oberflächen erreicht haben.

Bei einem konkreten Herstellungsverfahren wird ein maschinierter Implantathals und ein Korund-gestrahlter Körper mit 1 mol/l NaOH + 2% H₂O₂ bei 80° Celsius für 10 Minuten und nachfolgender Säureätzung bei 98° Celsius für 1 Stunde behandelt. Es entsteht ein Rauigkeitsgradient vom Implantathals zum Implantatkörper mit einer Rauigkeitsdifferenz von Ra=0,18 Mikrometer. Die Rauigkeitsdifferenz zwischen Hals und Körper erlaubt ein selektives Anwachsen von Fibroblasten im Halsbereich und Osteoblasten im Körperbereich. Gleichzeitig weist die Halsoberfläche auch gute osteogene Eigenschaften auf, sodass es im Bereich des Knochen/Zahnfleischübergangs auch bei nicht-geradem Knochenniveau zu einer guten Anwachsung der Osteoblasten kommen kann. Diese ist bei glatten Halsoberflächen nicht möglich. Die Erfinder gehen davon aus, dass durch die Rauheit des Halses die initiale Hydrophilie der Implantatoberfläche erhöht wird, was eine bessere Benetzung der Materialoberfläche mit Blutbestandteilen erwarten lässt. Hierdurch ergibt sich eine sehr hohe initale Adhäsionsrate für Fibroblasten und Osteoblasten. Dies konnte in vitro nach vierstündiger Inkubation von Fibroblasten und Osteoblasten gezeigt werden. Diese Eigenschaften führen dazu, dass in der ersten Phase der Wundheilung ein bakteriendichter Verschluss im Halsbereich erzielt wird. Glatte Oberflächen besitzen diese Eigenschaft nur in sehr geringem Maße. Die so verringerte Adhäsion erwünschter Zelltypen kann zu einer erhöhten Wachstumsrate von Epithelzellen führen, die dann ein langes Saumepithel am Hals entlang bis zum Übergang zwischen Hals und Körper ausbilden. Dieser Bereich ist dann empfindlich gegenüber einer bakteriellen Invasion (Perimplantitis). Ein Verhindern des epithelialen Tiefenwachstums durch eine feste Bindgewebsmanschette im Halsbereich, die durch die erfindungsgemäße Ausgestaltung der Oberflächen von Hals und Körper ermöglicht wird, verhindert Knochendurchbrüche.

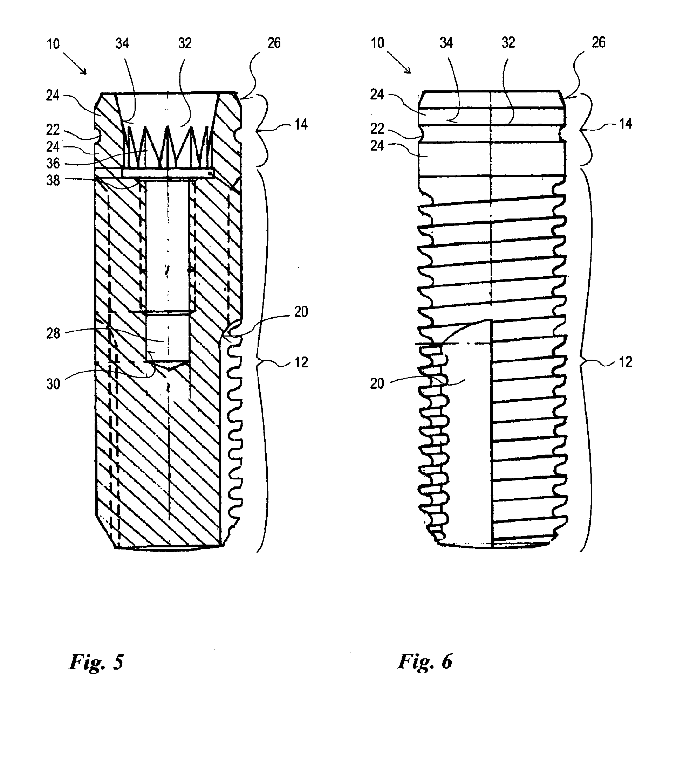

Die Figuren 5 und 6 stellen unterschiedliche Ansichten eines zweiten Ausführungsbeispiels eines erfindungsgemäßen Sockels 10 dar. Im Unterschied zu dem Sockel 10 gemäß den Figuren 1 und 2 ist der Gesamtkörper 12 im Wesentlichen zylindrisch ausgebildet und trägt ein durchgehendes Gewinde. Im übrigen wird auf die Beschreibung zu den Figuren 1 bis 4 verwiesen, deren Bezugszeichen in den Figuren 5 und 6 übernommen wurden. Figur 7 zeigt den Sockel 10 gemäß den Figuren 1 und 2 mit einem eingesetzten Aufbau 40. Der Aufbau 40 umfasst einen im Wesentlichen hohlzylindrischen Koronalbereich 42, einen sich apikal anschließenden Stützbereich 44, einen sich apikal an diesen anschließenden Verbindungsbereich 46 und einen den apikalen Abschluss des Aufbaus 40 bildenden Verdrehschutzvorsprung 48. Der Aufbau 40 ist von einer Durchgangsbohrung 50 durchsetzt, die in ihrem koronalen Bereich einen größeren Durchmesser aufweist als in ihrem apikalen Bereich, sodass sich eine Schulter 52 bildet. Der konisch nach apikal zulaufende Verbindungsbereich 46 ist korrespondierend zu dem konischen Einführungsbereich 34 des Aufnahmeraums 32 des Sockels 10 gestaltet. Der Verdrehschutzvorsprung 48 ist korrespondierend zu dem apikalen verdrehschutzbereich 36 des Aufnahmeraums 32 des Sockels 10 gestaltet. Die Schulter 38 im Sockel 10 bildet eine Anschlagfläche für die apikale Abschlussfläche des Verdrehschutzvorsprungs 48. Der Aufbau 40 kann drehfest in den Sockel 10 eingeführt werden, wobei der konische Einführungsbereich 34 des Aufnahmeraums 32 des Sockels 10 als Zentrierhilfe dient. Zur axialen Fixierung des Aufbaus 40 kann eine Fixierschraube 54 in die Durchgangsbohrung 50 eingeführt und mit dem Innengewinde 30 im Sockel 10 verschraubt werden. Der Kopf 56 der Schraube 54, dessen Durchmesser den Schraubenschaft überragt, findet dabei ein Widerlager an der Schulter 52.

Wie erwähnt, ist der konische Verbindungsbereich 46 des Aufbaus 40 an den konischen Einführbereich 34 des Aufnahmeraums 32 des Sockels 10 angepasst. Dabei ist es nicht zwingend erforderlich, dass der Aufbau-Kegelwinkel des konischen Verbindungsbereichs 46 des Aufbaus 40 exakt dem Öffnungswinkel des konischen Einführbereichs 34 des Aufnahmeraumes 32 des Sockels 10 entspricht. Vielmehr ist bevorzugt vorgesehen, dass der Aufbau-Kegelwinkel 20-60 Bogenminuten größer ist als der Sockel-Öffnungswinkel, sodass am koronalen Rand des Sockels 10 eine Kontaktlinie, auf die ein großer Druck wirkt, entsteht. Diese Kontaktlinie bildet eine zuverlässige Gas- und Bakteriendichtung. Man beachte, dass in diesem Fall der Aufbau 40 mit seiner apikalen Endfläche nicht an der Schulter 38 des Sockels 10 anschlagen darf. In diesem Fall ist es auch vorteilhaft, wenn die nicht-rotationssymmetrischen Vorsprünge im verdrehschutzbereich 36 des Aufnahmeraumes 32 des Sockels 10 exakt axial ausgerichtete Wände aufweisen, um eine hohe Axialtoleranz zu gewährleisten.

Der Stützbereich 44 des Aufbaus 40 dient der Abstützung einer in den Figuren nicht dargestellten Krone, die an dem Aufbau 40 befestigt wird. Zur guten Anpassung des Aufbaus 40 an die Krone einerseits und zur guten Anwachsung von Zahnfleischgewebe andererseits ist der Stützbereich bevorzugt doppelt konkav ausgebildet.

Figur 8 zeigt eine Ausführungsform, bei der der Aufbau 40 stoffschlüssig mit dem Sockel verbunden ist. Besondere Maßnahmen zum Verdrehschutz sind in diesem Fall nicht erforderlich.

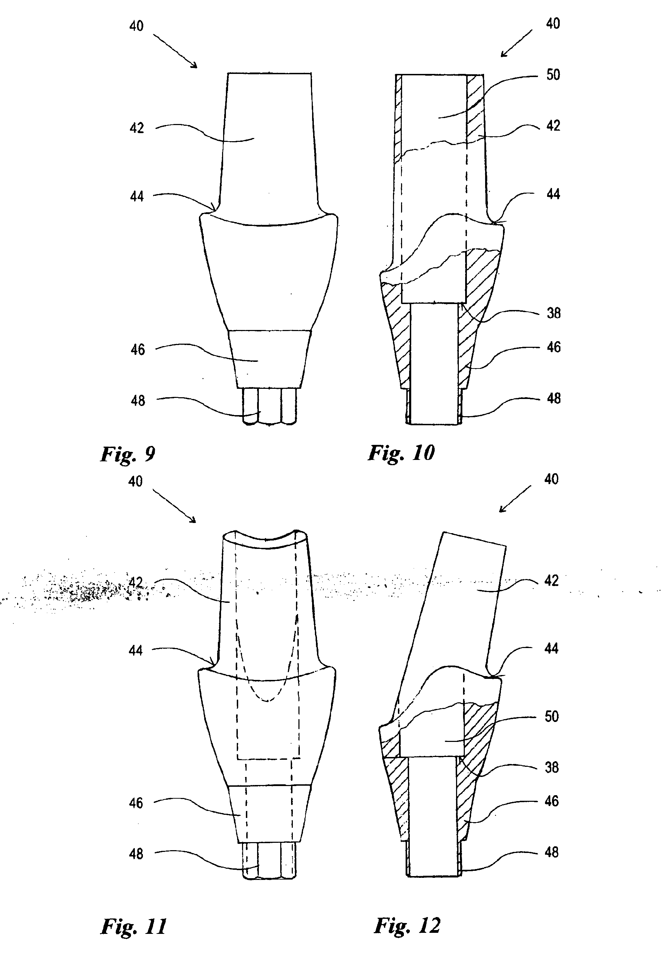

Die Figuren 9 und 10 zeigen zwei Ansichten einer weiteren Ausführungsform eines Aufbaus, wobei der koronale, den Sockel 10 im montierten Zustand überragende Bereich eine komplexere, an eine spezielle Zahngeometrie angepasste Struktur aufweist.

Die Figuren 11 und 12 zeigen eine weitere Ausführungsform eines vorteilhaften Aufbaus 40, die der Ausführungsform der Figuren 9 und 10 ähnlich ist, jedoch für den Fall eines Winkels zwischen der Zahnkrone und der künstlichen Wurzel, die der Implantatsockel bildet, vorgesehen ist.

Figur 13 zeigt eine einstückige Ausführungsform eines Implantates bei dem der Sockel 10 und der Aufbau 40 als ein gemeinsames Bauteil ausgeführt sind.

Figur 14 zeigt schematisch den Aufbau einer natürlichen Zahnreihe mit Wurzeln 60 und Kronen 62, wobei die Knochengrenze 64 und die Zahnfleischgrenze 66 dargestellt sind. Man beachte die bei gesunden Zähnen hoch in den Zahnzwischenraum vorspringenden Interdentalpapillen 68. Figur 15 zeigt schematisch eine Zahnreihe mit einem Implantat nach dem Stand der Technik. Man erkennt die häufige Problematik, dass in den Zwischenräumen zu den Nachbarzähnen des Implantats die Interdentalpapillen 68 aufgrund von Anwachsungsschwierigkeiten degeneriert sind.

Figur 16 zeigt schematisch eine Zahnreihe mit einem erfindungsgemäßen Implantat. Man beachte, dass aufgrund der verbesserten Anwachsung die Interdentalpapillen 68 wie bei natürlichen Zähnen ausgebildet sind.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere können die einzelnen Aspekte der Erfindung, nämlich die Rauheitsverteilung der Oberflächen von Sockelkörper und Sockelhals, die spezielle geometrische Gestaltung einzelner oder mehrerer Elemente des Körpers sowie die Gestaltung des Aufbaus und seiner Verbindung mit dem Sockel auch unabhängig voneinander angewendet werden.

### Bezugszeichenliste

- 10: Sockel
- 12: Körper von 10
- 14: Hals von 10
- 16: zylinderischer Abschnitt von 12
- 18: konischer Abschnitt von 12
- 20: Fräskante
- 22: Ringnut von 14
- 24: zylindrischer Bereich von 14
- 26: Anfasung
- 28: Sackbohrung
- 30: Innengewinde
- 32: Aufnahmebereich
- 34: Einführbereich von 32
- 36: Verdrehschutzbereich von 32
- 38: Schalter
- 40: Aufbau
- 42: Koronalbereich von 40
- 44: Stützbereich von 40
- 46: Verbindungsbereich von 40
- 48: Verdrehschutzvorsprung
- 50: Durchgangsbohrung
- 52: Schulter
- 54: Fixierschraube
- 56: Kopf von 54

## Patentansprüche

1. Zahnimplantat, umfassend einen bereichsweise in einen Kieferknochen inserierbaren Sockel (10) mit einem apikal gelegenen Körper (12) und einem koronal gelegenen Hals (14), deren äußere Oberflächen jeweils eine Oberflächen-Mikrostruktur vorgegebener Rauheit aufweisen, wobei der Wert der mittleren Rauheit der Körperoberfläche größer ist als der Wert der mittleren Rauheit der Halsoberfläche, wobei, der Wert der mittleren Rauheit der Halsoberfläche Ra=0,55 bis 0,71 Mikrometer beträgt
**dadurch gekennzeichnet,**
**dass** der Wert der mittleren Rauheit der Körperoberfläche Ra=0,75 bis 0,95 Mikrometer beträgt.

2. Zahnimplantat nach Anspruch 1,
**dadurch gekennzeichnet,**
**dass** die Oberflächen-Mikrostruktur der Körperoberfläche durch einen Strahlvorgang mit einem harten Strahlmittel und einen nachfolgenden Ätzvorgang und die Oberflächen-Mikrostruktur der Halsoberfläche durch einen Ätzvorgang erzeugt ist.

3. Zahnimplantat nach Anspruch 2,
**dadurch gekennzeichnet,**
**dass** der Ätzvorgang ein Ätzen mit einem basischen Ätzmittel umfasst.

4. Zahnimplantat nach Anspruch 3
**dadurch gekennzeichnet,**
**dass** das Ätzmittel eine hohe Konzentration von Kaliumhydroxid enthält.

5. Zahnimplantat nach einem der vorangehenden Ansprüche,
**dadurch gekennzeichnet,**
**dass** der Sockel (10) im Wesentlichen aus Metall oder einer Metalllegierung, insbesondere aus Titan oder einer Titanlegierung besteht.

6. Zahnimplantat nach einem der vorangehenden Ansprüche,
**dadurch gekennzeichnet,**
**dass** die Körper (12) eine makroskopische Außengewindestruktur trägt.

7. Zahnimplantat nach einem der vorangehenden Ansprüche, **dadurch gekennzeichnet,**
**dass** der Hals (14) eine umlaufende Ringnut (22) aufweist.

8. Zahnimplantat nach Anspruch 7
**dadurch gekennzeichnet,**
**dass** die Ringnut (22) einen kreisabschnittförmigen Querschnitt mit einem Radius von 0,2 bis 0,3 Millimetern, insbesondere von etwa 2,5 Millimetern trägt.

9. Zahnimplantat nach einem der vorangehenden Ansprüche,
**dadurch gekennzeichnet,**
**dass** weiter ein Aufbau (40) umfasst ist, der mit einem konischen Verbindungsbereich (46) in einen Aufnahmebereich (32) des innen hohl ausgebildeten Sockels (10) einsetzbar ist, wobei der konische Verbindungsbereich (46) eine mit einem Aufbau-Kegelwinkel konisch nach apikal zulaufende Außenfläche aufweist, der Aufnahmebereich (32) eine mit einem Sockel-Öffnungswinkel konisch nach apikal zulaufende Innenfläche (34) aufweist und der Aufbau-Kegelwinkel 20 bis 60 Bogenminuten größer ist als der Sockel-Öffnungswinkel.

10. Zahnimplantat nach Anspruch 9,
**dadurch gekennzeichnet,**
**dass** der Aufbau (40) im Wesentlichen aus Titan, einer Titanlegierung oder Zirkon-Oxid besteht.

11. Zahnimplantat nach einem der Ansprüche 9 bis 10,
**dadurch gekennzeichnet,**
**dass** der Aufbau (40) apikal des konischen Verbindungsbereichs (46) einen nicht-rotationssymmetrischen Verdrehschutzvorsprung (48) aufweist, der formschlüssig in eine korrespondierende Verdrehschutzausnehmung (36) des Sockels (10) einführbar ist.

12. Zahnimplantat nach einem der Ansprüche 1 bis 8
**dadurch gekennzeichnet,**
**dass** weiter ein sich koronal an den Hals (14) anschließender Aufbau (40) umfasst ist, der mit dem Sockel einstückig oder stoffschlüssig verbunden ist.

13. Verfahren zum Herstellen eines Zahnimplantatsockels (10) mit einem apikal gelegenen Körper (12) und einem koronal gelegenen Hals (14), umfassend die Schritte:
- Bereitstellen eines Sockelrohlings mit geschliffenen oder polierten äußeren Oberflächen,
- Strahlen der äußeren Oberfläche des Körpers (12) mit einem harten Strahlmittel und gleichzeitiges Schützen der äußeren Oberfläche des Halses gegen das Strahlmittel,
- Ätzen der äußeren Oberflächen des gesamten Sockelrohlings,
sodass der Wert der mittleren Rauheit der Körperoberfläche Ra=0,75 bis 0,95 Mikrometer und der Wert der mittleren Rauheit der Halsoberfläche Ra=0,55 bis 0,71 Mikrometer beträgt.

14. Verfahren nach Anspruch 13,
**dadurch gekennzeichnet,**
**dass** der Schritt des Ätzens ein Ätzen mit einem basischen Ätzmittel, insbesondere mit einer hohen Konzentration von Kaliumhydroxid umfasst.

## Claims

1. A dental implant, comprising a base (10) that can be inserted sectionally into a jawbone, having an apically located body (12) and a coronally located neck (14) whose outer surfaces each have a surface microstructure of given roughness, the value of the mean roughness of the body surface being larger than the value of the mean roughness of the neck surface, wherein the value of the mean roughness of the neck surface is Ra = 0.55 to 0.71 micrometres,
**characterized in that**
the value of the mean roughness of the body surface is Ra = 0.75 to 0.95 micrometers.

2. A dental implant according to Claim 1,
**characterized in that**
the surface microstructure of the body surface is produced by a blasting process using a hard blasting agent, followed by an etching process, and the surface microstructure of the neck surface is produced by an etching process.

3. A dental implant according to Claim 2,
**characterized in that**
the etching process comprises etching with an alkaline etchant.

4. A dental implant according to Claim 3,
**characterized in that**
the etchant contains a high concentration of potassium hydroxide.

5. A dental implant according to any of the preceding claims,
**characterized in that**
the base (10) consists substantially of metal or of a metal alloy, in particular of titanium or a titanium alloy.

6. A dental implant according to any of the preceding claims,
**characterized in that**
the body (12) bears a macroscopic external thread structure.

7. A dental implant according to any of the preceding claims,
**characterized in that**
the neck (14) has a circumferential annular groove (22).

8. A dental implant according to Claim 7,
**characterized in that**
the annular groove (22) has a circular-segment cross-section with a radius of from 0.2 to 0.3 millimetres, in particular of approximately 2.5 millimetres.

9. A dental implant according to any of the preceding claims,
**characterized in that**
it also comprises an abutment (40) that can be inserted by means of a conical connecting area (46) into a receiving area (32) of the internally hollow base (10), wherein the conical connecting area (46) has an outer surface running conically in the apical direction at an abutment taper angle, the receiving area (32) has an inner surface (34) running conically in the apical direction at a base opening angle, and the abutment taper angle is 20 to 60 minutes of arc larger than the base opening angle.

10. A dental implant according to Claim 9,
**characterized in that**
the abutment (40) consists substantially of titanium, a titanium alloy or zirconium oxide.

11. A dental implant according to one of the Claims 9 to 10,
**characterized in that**
the abutment (40) is provided apically from the conical connecting area (46) with a non-rotation-symmetrical anti-rotation projection (48) that can be inserted with a positive fit into a corresponding anti-rotation recess (36) on the base (10).

12. A dental implant according to any of Claims 1 to 8,
**characterized in that**
it also comprises an abutment (40) adjoining coronally at the neck (14), said abutment being of one piece with or bonded with the base.

13. A method for producing a dental implant base (10) having an apically situated body (12) and a coronally situated neck (14), comprising the following steps:
- provision of a blank base element with ground or polished outer surfaces,
- blasting of the outer surface of the body (12) using a hard blasting agent while simultaneously protecting the outer surface of the neck from the blasting agent,
- etching the outer surfaces of the entire blank base element,
such that the value of the mean roughness of the body surface is Ra = 0.75 to 0.95 micrometers and the value of the mean roughness of the neck surface is Ra = 0.55 to 0.71 micrometres.

14. A method according to Claim 13,
**characterized in that**
the etching step comprises etching with an alkaline etchant, especially with a high concentration of potassium hydroxide.

## Revendications

1. Implant dentaire, comprenant une base (10) pouvant être partiellement insérée dans un os maxillaire et dotée d'un corps (12) en position apicale et d'un collet (14) en position coronale, dont les surfaces extérieures présentent respectivement une microstructure superficielle de rugosité prédéfinie, sachant que la valeur de la rugosité moyenne de la surface du corps est supérieure à la valeur de la rugosité moyenne de la surface du collet, et que la valeur de la rugosité moyenne de la surface du collet est Ra = 0,55 à 0,71 micromètre,
**caractérisé en ce que** la valeur de la rugosité moyenne de la surface du corps est Ra = 0,75 à 0,95 micromètre.

2. Implant dentaire selon la revendication 1, **caractérisé en ce que** la microstructure superficielle de la surface du corps est produite par une opération de grenaillage avec un agent de grenaillage dur, suivie d'une opération de décapage, et que la microstructure superficielle de la surface du collet est produite par une opération de décapage.

3. Implant dentaire selon la revendication 2, **caractérisé en ce que** l'opération de décapage comprend un décapage avec un agent de décapage basique.

4. Implant dentaire selon la revendication 3, **caractérisé en ce que** l'agent de décapage contient une forte concentration d'hydroxyde de potassium.

5. Implant dentaire selon l'une quelconque des revendications précédentes, **caractérisé en ce que** la base (10) est constituée pour l'essentiel de métal ou d'un alliage métallique, en particulier de titane ou d'un alliage de titane.

6. Implant dentaire selon l'une quelconque des revendications précédentes, **caractérisé en ce que** le corps (12) porte une structure de filetage externe macroscopique.

7. Implant dentaire selon l'une quelconque des revendications précédentes, **caractérisé en ce que** le collet (14) présente une rainure annulaire circonférentielle (22).

8. Implant dentaire selon la revendication 7, **caractérisé en ce que** la rainure annulaire (22) possède une section en forme de segment de cercle avec un rayon de 0,2 à 0,3 millimètre, en particulier d'environ 2,5 millimètres.

9. Implant dentaire selon l'une quelconque des revendications précédentes, **caractérisé en ce qu'**il comprend en outre un pilier (40) qui peut être inséré par une région d'assemblage conique (46) dans une région réceptrice (32) de la base (10) réalisée intérieurement creuse, sachant que la région d'assemblage conique (46) présente une surface extérieure se terminant coniquement en direction apicale sous un angle de cône de pilier, que la région réceptrice (32) présente une surface intérieure (34) se terminant coniquement en direction apicale sous un angle d'ouverture de base, et que l'angle de cône de pilier est plus grand que l'angle d'ouverture de base de 20 à 60 minutes d'arc.

10. Implant dentaire selon la revendication 9, **caractérisé en ce que** le pilier (40) est constitué pour l'essentiel de titane, d'un alliage de titane ou d'oxyde de zirconium.

11. Implant dentaire selon la revendication 9 ou 10, **caractérisé en ce que** le pilier (40) présente, en position apicale par rapport à la région d'assemblage conique (46), une saillie de blocage de rotation (48) qui n'est pas à symétrie de révolution et qui peut être introduite en engagement positif dans un évidement (36) de blocage de rotation correspondant de la base (10).

12. Implant dentaire selon l'une quelconque des revendications 1 à 8, **caractérisé en ce qu'**il comprend en outre un pilier (40) qui se raccorde en position coronale au collet (14) et qui est assemblé à la base d'un seul tenant ou par liaison de matière.

13. Procédé de fabrication d'une base (10) d'implant dentaire dotée d'un corps (12) en position apicale et d'un collet (14) en position coronale, comprenant les étapes suivantes :
- mise à disposition d'une ébauche de base dotée de surfaces extérieures meulées ou polies,
- grenaillage de la surface extérieure du corps (12) avec un agent de grenaillage dur, tout en protégeant de l'agent de grenaillage la surface extérieure du collet,
- décapage des surfaces extérieures de la totalité de l'ébauche de base,
de telle sorte que la valeur de la rugosité moyenne de la surface du corps est Ra = 0,75 à 0,95 micromètre et que la valeur de la rugosité moyenne de la surface du collet est Ra = 0,55 à 0,71 micromètre.

14. Procédé selon la revendication 13, **caractérisé en ce que** l'étape de décapage comprend un décapage avec un agent de décapage basique, en particulier avec une forte concentration d'hydroxyde de potassium.
